# EUROPEAN PATENT APPLICATION

(11) **EP 1 768 318 A1**
(43) Date of publication of application: **28.03.2007**
(21) Application number: 06722287.7
(22) Date of filing: 10.04.2006
(51) Int. Cl.: H04L 12/42

(54) **A METHOD AND APPARATUS FOR IMPLEMENTING THE BROADCASTING OR MULTICASTING SERVICE IN RPR**

(30) Priority: 30.05.2005 CN 200510073460
(71) Applicant: Huawei Technologies Co., Ltd., Longgang District Shenzhen Guangdong 518129 (CN)
(72) Inventor: QUAN, Xingyue Huawei Administration Building, Shenzhen, Guangdong 518129 (CN)
(74) Representative: Manitz, Finsterwald & Partner GbR
(86) International application number: PCT/CN2006/000635
(87) International publication number: WO 2006/128344

(57) **Abstract**

A method for implementing broadcast or multicast traffic on a resilient packet ring (RPR) and a device using the method, the method including: when broadcast or multicast traffic is transmitted, the source site of the broadcast or multicast traffic decides whether the RPR where the site is located works normally; if the RPR works normally, transmit the broadcast or multicast traffic adopting a unidirectional broadcast/multicast manner; otherwise, according to the information of protection of the RPR, transmit the broadcast or multicast traffic adopting a bidirectional broadcast/multicast manner. The device includes a ring network topology discovery and protection sub-module and a broadcast/multicast control sub-module. The ring network topology discovery and protection sub-module controls the broadcast/multicast control sub-module to select a manner of broadcast/multicast through a trigger signal. By applying the above method and device, the reality of an RPR network and utilization of bandwidth may be improved.

## Description

### Field of the Invention

The present invention relates to Resilient Packet Ring (RPR) techniques, and more particularly, to a method for implementing broadcast or multicast traffic on an RPR and a device for implementing the method.

### Background of the Invention

The RPR technique is a new-style Media Access Control (MAC) layer technique which is able to optimize data transmission over a ring-topology network, and by which multiple service types, such as data, voice, and image, may be effectively transmitted. The technique has the characteristics of the Ethernet such as economy, flexibility, and extensibility, the merit of rapid protection of Synchronous Digital Hierarchy (SDH) ring network, and the technical advantages such as network topology automatic discovery, ring bandwidth sharing, equitable allocation, and strict Classification of Services (COS). The main object of the RPR technique is to provide a more economic and effective Metropolitan Area Network (MAN) solution without lowering the performance or reliability of a network. The main characteristics of the RPR technique are summed up as follows.

### 1. Dual-ring structure is adopted.

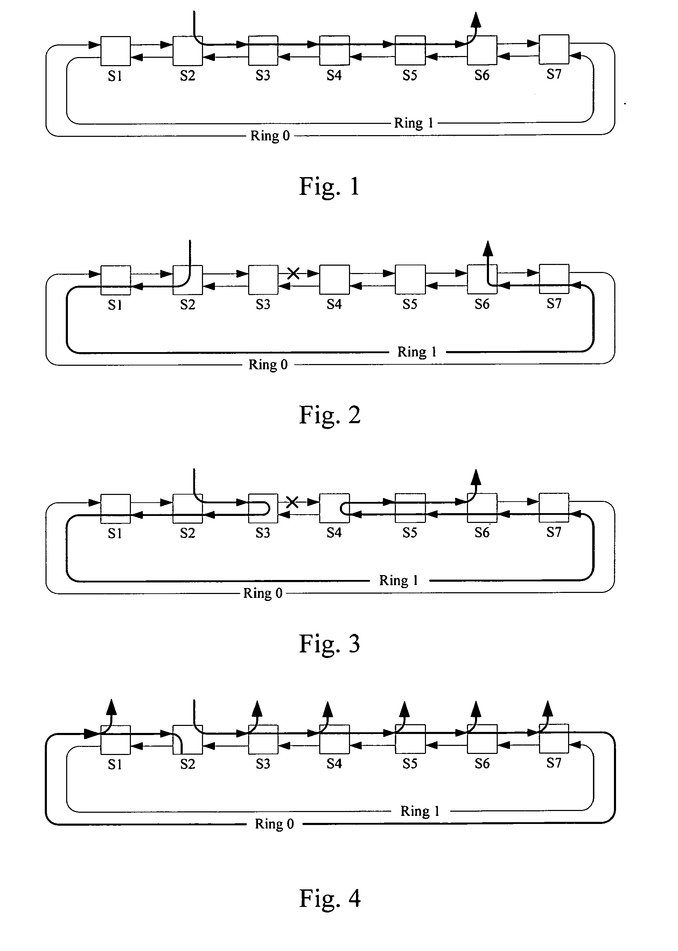

Referring to Fig. 1, an RPR network has a dual-ring structure including an external ring (Ring 0) and an internal ring (Ring 1). With respect to each site of S1, S2, S3, S4, S5, S6 and S7 on the ring network, each pair of adjacent sites has two paths to transmit data. For example, a data packet which is transmitted to site S6 by site S2, on one hand, may be transmitted on Ring 0, i.e., via sites S3, S4, and S5 to site 6, which is illustrated by the path with a thick arrow-head in Fig. 1, on other hand, may be transmitted on Ring 1 (the path is not shown), i.e., via sites S1 and S7 to site 6.

### 2. Rapid protection under 50ms is supported.

Since the RPR network has a dual-ring structure, if one ring fails, data which are transmitted on the ring may be switched to the other ring for transmission. By doing so, higher reliability is ensured. According to the standard, an RPR network may adopt two protection manners. One is Steering protection, and the other is Wrapping protection. Generally, each site on the RPR network may use a ring network topology discovery and protection sub-module thereon to collect topology information of the ring network, and detect the location of a failure timely if the RPR network fails, thereby implementing protection control, i.e. controlling the time and manner of protection at this site.

The Steering protection refers to that, in the case that a current data transmitting path fails, the data are directly switched from the failed ring to the ring without a failure at the source site of traffic. Fig. 2 illustrates the transmitting path of a data packet in the case that the Steering protection is adopted to switch the data and the link between site S3 and site S4 on Ring 0 fails when the data need to be transmitted from site S2 to site S6 through Ring 0. As illustrated by the thick arrow-head in Fig. 2, when the Steering protection is adopted, the protection will be implemented at the source site S2 of traffic. By doing so, the data transmitted from site S2 to site S6 are directly switched from Ring 0 to Ring 1 and transmitted on Ring 1. Meanwhile, the data transmitted by site S2 will reach site S6 via sites S 1 and S7 so as to keep away from the failed link.

The Wrapping protection refers to that, in the case that a link in the current data transmitting path fails, the data are switched at two end sites of the failed link. Fig. 3 illustrates the transmitting path of data packets in the case that the Wrapping protection is adopted to switch the data and the link between site S3 and site S4 on Ring 0 fails when the data need to be transmitted from site S2 to site S6 through Ring 0. As illustrated by the thick arrow-head in Fig. 3, in this case, the protection is performed at the two end sites S3 and S4 of the failed link. After the data transmitted from site S2 to site S6 reach one end site S3 of the failed link on Ring 0, the data are switched to Ring 1 at site S3, and reach the other end site S4 on Ring 1 via sites S2, S1, S7, S6 and S5. Then the data are switched to Ring 0 at site S4, and reach site S6 on Ring 0 via site S5. This manner may also keep the data away from the failed link between sites S3 and S4.

### 3. Not only unicast is supported, but also multicast and broadcast are supported.

It is understood by those skilled in the art that, transmission of unicast, multicast, and broadcast data traffic on the RPR ring according to the RPR MAC address of a site may be implemented by mapping the unicast, multicast, and broadcast data packets based on IEEE 802.3 MAC address to the RPR MAC address of the site.

It is clearly proposed by IEEE 802.17 standard that an RPR network may adopt two broadcast/multicast manners of which one is unidirectional broadcast/multicast and the other is bidirectional broadcast/multicast. Generally, which broadcast/multicast manner each site on the RPR network adopts to transmit broadcast or multicast traffic data is decided by a broadcast/multicast control sub-module in a ringlet selection module of each site.

The unidirectional broadcast/multicast means that the site transmitting the broadcast/multicast traffic decides one ring on which broadcast/multicast traffic data are transmitted. Fig. 4 is a schematic diagram illustrating that site S2 transmits a broadcast packet on Ring 0 in the unidirectional broadcast manner. As illustrated by Fig. 4, each site on Ring 0, in turn, duplicates the broadcast packet and forwards the broadcast packet to the next site. When the broadcast packet returns to site S2 again, site S2 drops the broadcast packet. As such, the unidirectional broadcast is implemented. The method for implementing unidirectional multicast is similar to the unidirectional broadcast above except that each site on the RPR network decides whether to duplicate the multicast packet according to the multicast address carried by the multicast packet.

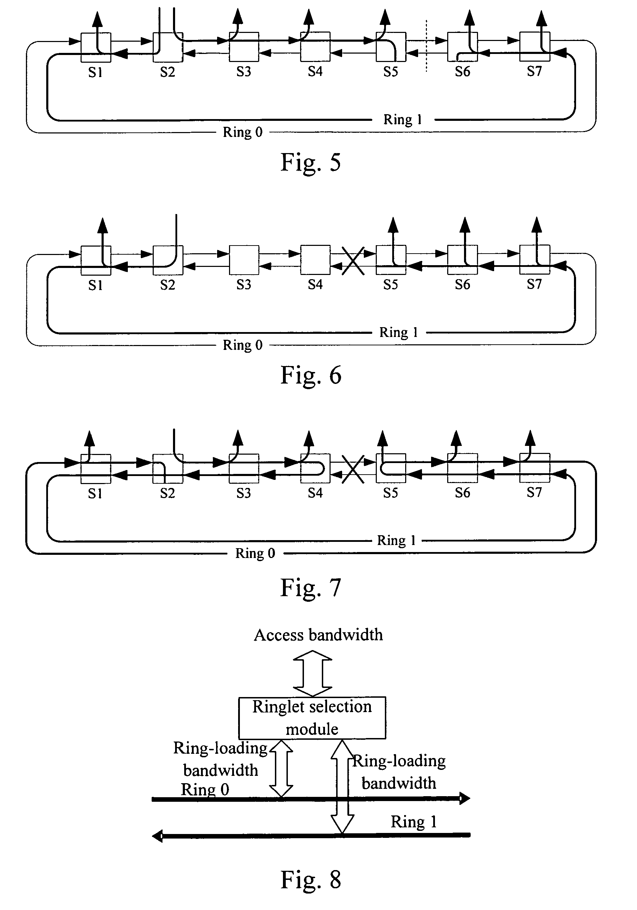

The bidirectional broadcast/multicast means that the site which transmits the broadcast/multicast traffic transmits broadcast/multicast traffic data on both rings simultaneously, and sets respectively the Time to Live (TTL) of each broadcast or multicast packet transmitted on the two rings according to the topology of the RPR network and the number of sites on the ring network. Fig. 5 is a schematic diagram illustrating site S2 transmitting each broadcast packet on Ring 0 and Ring 1 in the bidirectional broadcast manner. As shown in Fig. 5, site S2 sets the TTL of each broadcast packet transmitted on the two rings as 3. For example, on Ring 0, the TTL of the broadcast packet is reduced by 1 each time a site is passed. When the broadcast packet reaches site S5 through sites S3 and S4, the TTL of the broadcast packet reaches zero. Site S5 duplicates the broadcast packet and then drops it. On Ring 1, the TTL of the broadcast packet is reduced by 1 each time a site is passed. When the broadcast packet reaches site S6 through sites S1 and S7, the TTL of the broadcast packet reaches zero. Site S6 duplicates the broadcast packet and then drops it. By doing so, each broadcast packet transmitted on the two rings from site S2 reaches all the sites, therefore implementing bidirectional broadcast. Bidirectional multicast may be implemented by the above method as well, only that each site on an RPR network decides whether to duplicate the multicast packet according to the multicast address in the multicast packet.

It can be seen from the above description that, the broadcast or multicast traffic may be implemented easily when the RPR network is used. However, in real application, the two broadcast/multicast manners above have the following disadvantages.

In terms of the unidirectional broadcast/multicast manner, on one hand, since Steering protection is performed at the source site of broadcast or multicast traffic, the Steering protection may result in loss of the broadcast or multicast traffic. Fig. 6 illustrates the transmitting path of a broadcast packet in the case that the unidirectional broadcast manner is adopted and the traffic is switched in the Steering protection manner by the RPR network when the link between sites S4 and S5 fails. As illustrated by the thick arrow-head in Fig. 6, since site S2 switches the broadcast packet transmitted to Ring 1 for transmitting, the broadcast packet will not reach sites S3 and S4, therefore resulting in loss of broadcast or multicast traffic. On the other hand, since the Wrapping protection is performed at the end sites of the failed link, the unidirectional multicast/broadcast traffic data will occupy double bandwidth of the network in the case that the Wrapping protection is adopted. Fig. 7 illustrates the transmitting path of a broadcast packet in the case that the unidirectional broadcast manner is adopted and the traffic is switched in the Wrapping protection manner by the RPR network after the link between sites S4 and S5 fails. As illustrated by the thick arrow-head in Fig. 7, the broadcast packet transmitted by site S2 will reach sites S3 and S4 in turn on Ring 0. The site S4 will switch the broadcast packet to be transmitted to Ring 1. Next, the broadcast packet will arrive at the other end site S5 of the failed link via sites S3, S2, S1, S7 and S6 on Ring 1. And then, site S5 will switch the broadcast packet to Ring 0 and the broadcast packet will at last return to site S2 via sites S6, S7 and S1 on Ring 0 and be terminated by site S2. It can be seen from Fig. 7 that, while the Wrapping protection may enable the broadcast packet to reach all sites on the RPR so as to implement the broadcast traffic, adopting this manner may occupy both bandwidths of the internal network and external network of the RPR ring, that is, occupy double of the bandwidths needed by the broadcast traffic, which results in the decrease of utilization of bandwidth in the system.

With respect to the bidirectional broadcast/multicast manner, in case that an RPR network fails, no matter which switching manner is adopted, the loss of broadcast or multicast traffic may be avoided by respectively setting the TTL of each broadcast or multicast packet transmitted on the external ring and internal ring. However, since the site transmitting the broadcast or multicast packet will occupy the two rings for transmitting the broadcast or multicast packet, double of the Point Of Presence (POP) bandwidth of the site will be occupied, which reduces the bandwidth of the site for transmitting other traffic. Fig. 8 is a schematic diagram illustrating the relationship between the access bandwidth of a site on the RPR network and the ring-loading bandwidth thereof. As shown in Fig. 8, there is a ringlet selection module inside each site which is used to select a ring to transmit the current data packet. The bandwidth which is occupied when each station transmits a data packet along a ring is called the ring-loading bandwidth of the ring. It may be concluded that the access bandwidth of each site is the sum of ring-loading bandwidths of the two rings. Accordingly, it may be seen that the broadcast or multicast packet will occupy the ring-loading bandwidths of two rings simultaneously when the bidirectional broadcast/multicast manner is used to transmit the broadcast/multicast traffic, which reduces the bandwidth of the site for transmitting other traffic. Therefore, the bidirectional broadcast/multicast manner is not suitable to be adopted when the RPR network works normally.

### Summary of the Invention

An embodiment of the present invention provides a method for implementing broadcast or multicast traffic on an RPR network which can implement broadcast or multicast traffic in both Steering switching manner and Wrapping switching manner. On one hand, the method may avoid the possible loss of traffic when the RPR network fails. On the other hand, the method may avoid waste of bandwidth, thereby the reliability and utilization of bandwidth of the RPR network may be guaranteed.

The method for implementing broadcast or multicast traffic on resilient packet ring (RPR) provided by an embodiment of the present invention includes:
deciding, by a source site of broadcast or multicast traffic, whether an RPR where said source site is located works normally when said broadcast or multicast traffic is transmitted;
transmitting said broadcast or multicast traffic adopting a unidirectional broadcast/multicast manner if the RPR works normally;
transmitting said broadcast or multicast traffic adopting a bidirectional broadcast/multicast manner if the RPR fails, according to information of protection of the RPR.

Said deciding includes:
deciding, by said source site of the broadcast or multicast traffic, whether the RPR works normally according to current topology information of the RPR transmitted from adjacent sites on the RPR.

Said information of protection includes location information of a failed link on the RPR; and
said adopting the bidirectional broadcast/multicast manner includes:
calculating, according to location information of the failed link, the Time to Live (TTL) of each broadcast or multicast packet on the internal ring and external ring when transmitting the broadcast or multicast traffic adopting the bidirectional broadcast/multicast manner;
setting said TTL of each broadcast or multicast packet transmitted on the internal ring and the external ring according to the TTL calculated;
transmitting each broadcast or multicast packet on the internal ring and external ring simultaneously according to the TTL set.

Said calculating the TTL includes:
determining, according to relationship between the location of the source site and the location of the failed link, said TTL which ensures that each broadcast or multicast packet transmitted by the source site achieves all the sites on the RPR through the internal ring and the external ring.

A device for implementing broadcast or multicast traffic on Resilient Packet Ring (RPR), applied in a site of an RPR, includes: a ring network topology discovery and protection sub-module and a broadcast/multicast control sub-module; wherein,
said ring network topology discovery and protection sub-module is used for collecting topology information of the RPR, controlling the site to perform protection when the topology of the RPR changes, and transmitting a trigger signal indicating the current working status of the RPR to said broadcast/multicast control sub-module;
said broadcast/multicast control sub-module is used for receiving said trigger signal from said ring network topology discovery and protection sub-module, deciding the working status of the RPR where the site is located according to said trigger signal, performing multicast or broadcast adopting a unidirectional broadcast/multicast manner if the RPR works normally, and performing broadcast or multicast adopting a bidirectional broadcast/multicast manner if the RPR fails.

Said ring network topology discovery and protection sub-module is further used for calculating said TTL of each broadcast or multicast packet on the internal ring and external ring when the broadcast or multicast traffic is transmitted in the bidirectional broadcast/multicast manner according to the location of the failure on the RPR when the RPR fails, and transmitting said TTL of each broadcast or multicast packet on the internal ring and external ring to said broadcast/multicast control sub-module; and
said broadcast/multicast control sub-module is further used for receiving said TTL of each broadcast or multicast packet on the internal ring and external ring from said ring network topology discovery and protection sub-module, and performing the bidirectional broadcast/multicast according to said TTL of each broadcast or multicast packet on the internal ring and external ring.

It can be seen that the method and device for implementing broadcast or multicast traffic on an RPR network provided by an embodiment of the present invention combine the unidirectional broadcast/multicast manner and the bidirectional broadcast/multicast manner. If the RPR network works normally, the unidirectional broadcast/multicast manner is adopted to implement the broadcast or multicast traffic so as to ensure the access bandwidth of each site on the RPR. If a link on the RPR network fails, the bidirectional broadcast/multicast manner is adopted to implement the broadcast or multicast traffic, which on one hand may avoid the loss of traffic, on the other hand may save the bandwidth of the RPR network and improve the reliability of an RPR network and the utilization of bandwidth.

### Brief Description of the Drawings

Fig. 1 illustrates the transmitting path of data packet when site S2 on the RPR network transmits a data packet to site S6 in normal conditions.
Fig. 2 illustrates the transmitting path of data packet when the link between sites S3 and S4 fails and the RPR network has switched in the Steering protection manner.
Fig. 3 illustrates the transmitting path of data packet when the link between sites S3 and S4 fails and the RPR network has switched in the Wrapping protection manner.
Fig. 4 illustrates the transmitting path of the broadcast packet transmitted in the unidirectional broadcast manner.
Fig. 5 illustrates the transmitting path of the broadcast packet in the bidirectional broadcast manner.
Fig. 6 illustrates the transmitting path of the broadcast packet in the unidirectional broadcast manner when the link between sites S3 and S4 fails and the RPR network has switched in the Steering protection manner.
Fig. 7 illustrates the transmitting path of the broadcast packet in the unidirectional broadcast manner when the link between sites S3 and S4 fails and the RPR network has switched in the Wrapping protection manner.
Fig. 8 is a schematic diagram illustrating the relationship between the access bandwidth of a site on the RPR network and the ring-loading bandwidth thereof.
Fig. 9 is a flow chart of the method for implementing broadcast/multicast traffic according to an embodiment of the present invention.
Fig. 10 shows the transmitting path of the broadcast packet when the link between sites S5 and S6 fails and site S2 transmits broadcast packets in the bidirectional broadcast/multicast manner according to the method of an embodiment of the present invention.
Fig. 11 shows the internal architecture of the device implementing the method for performing broadcast/multicast traffic according to an embodiment of the present invention.

### Detailed Description of the Invention

The method and device of the present invention will be illustrated in detail with reference to the attached drawings and preferred embodiments of the present invention hereinafter.

In order to avoid loss of traffic or waste of bandwidth when a unidirectional broadcast/multicast manner is used, and to solve the problem that too much POP bandwidth is occupied when a bidirectional broadcast/multicast manner is used, an embodiment of the present invention provides a method for implementing broadcast or multicast traffic on an RPR network. In the method according to the embodiment, the unidirectional broadcast/multicast manner and the bidirectional broadcast/multicast manner are combined. When the RPR network works normally, the unidirectional broadcast/multicast manner is adopted to implement the broadcast or multicast traffic so as to ensure the access bandwidth of each site on the RPR. If the RPR network fails, the bidirectional broadcast/multicast manner is adopted to implement the broadcast or multicast traffic to avoid the loss of traffic and the waste of bandwidth.

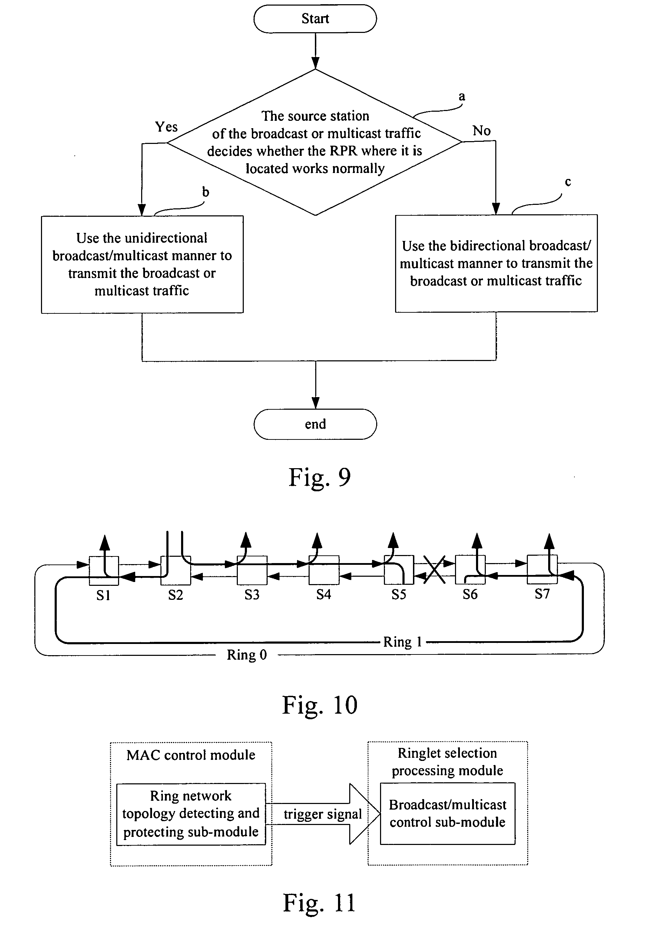

Referring to Fig. 9, the method according to an embodiment of the present invention mainly includes the following steps.
a. When a site on the RPR network transmits broadcast or multicast traffic, the source site of the broadcast or multicast traffic decides whether the RPR network works normally. If the RPR network works normally, perform step b. Otherwise, perform step c.
b. The unidirectional broadcast/multicast manner is adopted to transmit the broadcast or multicast traffic.
c. According to the information of protection of the RPR network, the bidirectional broadcast/multicast manner is adopted to transmit the broadcast or multicast traffic.

According to the standard, each site on the RPR network may learn current working conditions of the RPR network through network topology information transmitted by adjacent sites so as to decide whether the current RPR network fails. If a failure of the RPR network is currently detected, each site may further learn the location information of the failed link or failed site according to the topology information.

The above-mentioned information of protection includes the location information of the failed link on the RPR network.

The source site of the broadcast or multicast traffic first calculates the TTL of each broadcast packet transmitted on the internal ring and external ring according to the location information of the above failed link when the source site transmits the broadcast or multicast traffic in the bidirectional broadcast/multicast manner, and then sets the TTL of each broadcast or multicast packet transmitted by itself according to the calculated result and further transmits the broadcast or multicast packet to the internal network and external network of the RPR ring simultaneously. The TTL calculated of each broadcast or multicast packet should ensure that the broadcast or multicast packet respectively transmitted may arrive at all the sites of the RPR on the two rings.

Site S2 transmitting broadcast traffic is hereinafter taken as an example to illustrate in detail the method of the embodiment of the present invention.

When transmitting broadcast traffic, if site S2 detects that the current RPR network works normally, site S2 will transmit a broadcast packet on the transmitting path as shown in Fig. 4 in the unidirectional broadcast/multicast manner. Site S2 transmits the broadcast packet on Ring 0 (or Ring 1) and each site on Ring 0 (or Ring 1) duplicates in turn the broadcast packet and transmits the broadcast packet to the next site. When the broadcast packet returns to site S2 again, site S2 drops the broadcast packet. If site S2 detects that the link between sites S5 and S6 on the RPR network fails, site S2 first calculates the TTL of each broadcast packet transmitted on Ring 0 and Ring 1 by site S2 according to the location of the failure. For example, if the link between sites S5 and S6 fails, according to the location of the failure, the TTL of each broadcast packet transmitted on Ring 0 and Ring 1 by site S2 should be set as 3. Then site S2 is switched to the bidirectional broadcast/multicast manner, and the broadcast packet will be transmitted on Ring 0 and Ring 1 simultaneously. At this point, the transmitting path on which site S2 transmits the broadcast packet is as shown in Fig. 10. After site S2 transmits the broadcast packet on Ring 0 and Ring 1 respectively, each site on the two rings duplicates and transmits the broadcast packet in turn until the TTL of each broadcast packet transmitted on the two rings reaches zero. By doing so, it may be ensured that all sites of the RPR network have duplicated the broadcast packet. After detecting that the failed link between sites S5 and S6 has been restored, site S2 is switched to the unidirectional broadcast/multicast manner again, and continues transmitting the broadcast packet as shown in Fig. 4.

It can be seen from the above description that, according to the method of the embodiment of the present invention, when the RPR network works normally, the access bandwidth of each site on the RPR may be ensured, and when the RPR network fails, loss of traffic may be avoided, thereby reliability of an RPR network and utilization of the bandwidth may be improved.

In order to implement the above method, an embodiment of the present invention further provides a device for implementing broadcast or multicast traffic on an RPR network in accordance with the above method.

Since each site on an RPR network collects ring network topology status and controls the protection through a ring network topology discovery and protection sub-module in an MAC control module, and the broadcast/multicast manner to be adopted is decided by a broadcast/multicast control sub-module in a ringlet selection module of each site, the device according to an embodiment of the present invention may be implemented as follows. Set up a signal connection between the ring network topology discovery and protection sub-module and the broadcast/multicast control sub-module of each site on the RPR network. When the ring network topology discovery and protection sub-module of the source site of broadcast or multicast traffic detects that the RPR network topology has changed and the RPR network needs to implement protection, for example, when the RPR network fails or is restored from the failure, the module transmits a trigger signal to the broadcast/multicast control sub-module of the source site to notify the broadcast/multicast control sub-module of a change of topology status of the RPR network and a need for changing the broadcast/multicast manner of the source site. And then the broadcast/multicast control sub-module of the source site of the broadcast or multicast traffic controls the protection of the broadcast/multicast manner.

The detailed description is as follows. The device in accordance with an embodiment of the present invention is used in each site on an RPR network as shown in Fig. 11, including two modules, a ring network topology discovery and protection sub-module located in a MAC control module and a broadcast/multicast control sub-module located in a ringlet selection module.

The ring network topology discovery and protection sub-module is mainly used for collecting network topology information including location information of a failed link, controlling the source site to perform protection when the topology and protection status of the RPR network change, for example, implement protection when a failure happens or is removed, and transmitting a trigger signal to the broadcast/multicast control sub-module at the same time. As such, the broadcast/multicast control sub-module may determine, according to the received trigger signal, that the current RPR network fails or is restored from the failure.

In case that the RPR network fails, the ring network topology discovery and protection sub-module further needs to calculate the TTL of each broadcast or multicast packet transmitted on the internal ring and external ring by the source site in the bidirectional broadcast/multicast manner according to the location information of the failed link, and transmits the TTL calculated of each broadcast or multicast packet to the broadcast/multicast control sub-module. It should be noted that, the TTL calculated of each broadcast or multicast packet transmitted should ensure that the broadcast or multicast packet to be transmitted on the two rings respectively may reach all sites on the RPR.

The broadcast/multicast control sub-module is used for receiving the trigger signal from the ring network topology discovery and protection sub-module, and selecting a current broadcast/multicast manner according to the trigger signal, that is, when the RPR network works normally, adopting the unidirectional broadcast/multicast manner to perform the broadcast or multicast; when the RPR network fails, adopting the bidirectional broadcast/multicast manner to perform the broadcast or multicast according to the TTL received of each broadcast or multicast packet transmitted on the internal network and external network of the RPR network.

It can be seen that the device for implementing broadcast/multicast traffic on an RPR in accordance with an embodiment of the present invention enables the broadcast/multicast control sub-module to control the broadcast/multicast manner according to a change of the topology status of the RPR network by adding a trigger signal between the ring network topology discovery and protection sub-module and the broadcast/multicast control sub-module. By doing so, when the RPR network works normally, the site is controlled to select the unidirectional broadcast/multicast manner to transmit a broadcast or multicast packet, thereby guaranteeing the access bandwidth of each site on the RPR network. When the RPR network fails, the site is controlled to select the bidirectional broadcast/multicast manner to transmit a broadcast or multicast packet, thereby improving reliability and utilization of bandwidth.

The above descriptions are only preferred embodiments of the invention rather than limitation. Obviously, those skilled in the art may make numerous changes and variations on the solution of this invention without departing from the spirit and scope thereof. Accordingly, it is intended that this invention includes the changes and variations in case that such changes and variations come within the scope as set forth in the appended claims and the equivalent techniques thereof.

## Claims

1. A method for implementing broadcast or multicast traffic on Resilient Packet Ring (RPR) comprising:
deciding, by a source site of broadcast or multicast traffic, whether an RPR where said source site is located works normally when said broadcast or multicast traffic is transmitted;
transmitting said broadcast or multicast traffic adopting a unidirectional broadcast/multicast manner if the RPR works normally;
transmitting said broadcast or multicast traffic adopting a bidirectional broadcast/multicast manner if the RPR fails, according to information of protection of the RPR.

2. The method of Claim 1, wherein said deciding comprises:
deciding, by said source site of the broadcast or multicast traffic, whether the RPR works normally according to current topology information of the RPR transmitted from adjacent sites on the RPR.

3. The method of Claim 1, wherein said information of protection comprises location information of a failed link on the RPR; and
said adopting the bidirectional broadcast/multicast manner comprises:
calculating, according to location information of the failed link, the Time to Live (TTL) of each broadcast or multicast packet on the internal ring and external ring when transmitting the broadcast or multicast traffic adopting the bidirectional broadcast/multicast manner;
setting said TTL of each broadcast or multicast packet transmitted on the internal ring and the external ring according to the TTL calculated;
transmitting each broadcast or multicast packet on the internal ring and external ring simultaneously according to the TTL set.

4. The method of Claim 3, wherein said calculating the TTL comprises:
determining, according to relationship between the location of the source site and the location of the failed link, said TTL which ensures that each broadcast or multicast packet transmitted by the source site achieves all the sites on the RPR through the internal ring and the external ring.

5. A device for implementing broadcast or multicast traffic on Resilient Packet Ring (RPR), applied in a site of an RPR, comprising: a ring network topology discovery and protection sub-module and a broadcast/multicast control sub-module; wherein,
said ring network topology discovery and protection sub-module is used for collecting topology information of the RPR, controlling the site to perform protection when the topology of the RPR changes, and transmitting a trigger signal indicating the current working status of the RPR to said broadcast/multicast control sub-module;
said broadcast/multicast control sub-module is used for receiving said trigger signal from said ring network topology discovery and protection sub-module, deciding the working status of the RPR where the site is located according to said trigger signal, performing multicast or broadcast adopting a unidirectional broadcast/multicast manner if the RPR works normally, and performing broadcast or multicast adopting a bidirectional broadcast/multicast manner if the RPR fails.

6. The device of Claim 5, wherein said ring network topology discovery and protection sub-module is further used for calculating said TTL of each broadcast or multicast packet on the internal ring and external ring when the broadcast or multicast traffic is transmitted in the bidirectional broadcast/multicast manner according to the location of the failure on the RPR when the RPR fails, and transmitting said TTL of each broadcast or multicast packet on the internal ring and external ring to said broadcast/multicast control sub-module; and
said broadcast/multicast control sub-module is further used for receiving said TTL of each broadcast or multicast packet on the internal ring and external ring from said ring network topology discovery and protection sub-module, and performing the bidirectional broadcast/multicast according to said TTL of each broadcast or multicast packet on the internal ring and external ring.
